# EUROPÄISCHE PATENTSCHRIFT

(11) **EP 3 601 948 B1**
(45) Veröffentlichungstag und Bekanntmachung des Hinweises auf die Patenterteilung: **09.08.2023**
(21) Anmeldenummer: 18706704.6
(22) Anmeldetag: 19.02.2018
(51) Int. Cl.: G01B 21/32

(54) **ÜBERLASTERKENNUNGSVORRICHTUNG BEI EINEM FAHRWERKSBAUTEIL**
OVERLOAD RECOGNITION SYSTEM ON A CHASSIS PART
SYTEME DE DÉTECTION DE SURCHARGE DANS UN COMPOSANT DE TRAIN DE ROULEMENT

(30) Priorität: 21.03.2017 DE 102017204729
(43) Veröffentlichungstag der Anmeldung: 05.02.2020
(73) Patentinhaber: ZF Friedrichshafen AG, 88046 Friedrichshafen (DE)
(72) Erfinder: STILLIG, Carsten, 32351 Stemwede (DE)
(74) Vertreter: ZF Friedrichshafen AG
(86) Internationale Anmeldenummer: PCT/EP2018/053964
(87) Internationale Veröffentlichungsnummer: WO 2018/171992

(56) Entgegenhaltungen:
- EP-A2- 2 218 629
- DE-A1- 4 215 306
- DE-A1-102005 027 251
- US-A1- 2015 166 101

## Beschreibung

Die Erfindung betrifft eine Überlasterkennung gemäß dem Oberbegriff von Patentanspruch 1.

Eine derartige Überlasterkennung ist aus der DE 42 15 306 A1 bekannt. Hierbei sind mehrere Sensoren an jeweils einem Steg angeordnet, wodurch sich eine Art Käfig bildet, wobei die Stege zwischen zwei Randabschnitten ausgebildet sind und die beiden Randabschnitte auf einer Mantelfläche einer Welle befestigt sind.

Aus der DE 10 2005 027 251 A1 ist bekannt, dass mehrere Piezoelemente in einer Reihe zum Ausbilden eines Biegesensor-Arrays mittels eines Klebefilms auf ein Fahrwerksbauteil geklebt sind.

Aus der US 2015/166101 A sowie der EP 2 218 629 A2 ist jeweils eine Überlasterkennung für ein stangenartiges Fahrwerksbauteil bekannt, umfassend einen Sensor, der eine Sollzustandsgröße des Fahrwerksbauteils erfasst, wobei der Sensor als ein Deformationserfassungssensor für ein einzelnes Fahrwerksbauteil ausgeführt ist

Moderne Kraftfahrzeuge, vor allem PKW, sind zunehmend mit Assistenzsystemen ausgestattet, die einerseits den Fahrer entlasten aber andererseits immer weniger Rückmeldung des Fahrwerkes an den Fahrer zulassen. Dies kann dazu führen, dass ein Fahrer einen Defekt, wie zum Beispiel eine verbogene Spurstange oder einen verformten Querlenker nicht bemerkt. Aus entsprechenden Versuchen ist aber bekannt, dass die Restlebensdauer nach einer plastischen Verformung bei Fahrwerckomponenten mitunter erheblich reduziert wird. Es könnte also zu dem Fall kommen, dass ein Fahrer durch die ausgleichende Wirkung der Assistenzsysteme eine Vorschädigung der Spurstange z.B. durch eine Hindernisüberfahrt nicht bemerkt und es später aus diesem Grund zum Bruch und einem Unfall kommt.

So beschreibt die DE 10 2010 043 778 A1 ein Lenkerelement mit einer mechanischen Überlastsicherung, die bei Wirksamwerden zu einem deutlich spürbaren Lenkungsspiel führt, das aber, wie bereits ausgeführt, durch ein Assistenzsystem kompensiert würde und damit für den Fahrer nicht erkennbar wäre.

Die DE 10 2013 018 526 A1 betrifft ein System zur Erfassung einer Änderung einer Achseinstellung eines Kraftfahrzeugs. Dazu verfügt das System über eine Kraftmesseinheit oder eine Winkelmesseinheit, die ein Signal an eine Auswerteeinrichtung leitet. Die Auswerteeinrichtung vergleicht das Momentansignal mit einem Referenzsignal, wobei eine Überschreitung des Referenzsignals als eine Überlastung der Fahrzeugachse interpretiert wird.

Die Auswertung eines Kraftsignals ist häufig mit einer größeren Unschärfe verbunden, da eine über der kalkulierten Belastungsgrenze auftretende Kraft nicht zwangsläufig auch zu einem Schaden führt. Folglich wird dann eine Reparatur durchgeführt, die an sich nicht notwendig wäre.

Eine Winkelmessung ist ebenfalls keine eindeutige Messgröße, da bei einer Überbelastung der theoretische Fall auftreten kann, dass sich zwei Lenker innerhalb der Achse zwar verbiegen, jedoch der Winkel zwischen den beiden Lenkern im Toleranzbereich bleibt, indem sich die Verformungen quasi kompensieren. Dann wären beide Lenker auszutauschen, doch würde das System diesen Fall nicht erkennen.

Die Aufgabe der vorliegenden Erfindung besteht darin, eine Überlasterkennung bereitzustellen, bei der die aus dem Stand der Technik bekannten Probleme behoben sind.

Die Aufgabe wird durch die Merkmale des Anspruchs 1 gelöst.

Als Führungsgröße wird die Deformation des Fahrwerkbauteils erfasst. Es wird also eine Größe verwendet, die direkt einen Fehler erkennen lassen würde, der auch zu einer Veränderung der Fahrwerksgeometrie oder gar einem Schadensfall führt. Des Weiteren wird an einem einzigen Bauteil die Belastung ermittelt. Ein Kompensationseffekt innerhalb des Fahrwerks kann nicht auftreten.

Der Sensor umfasst mehrere Einzelsensoren. Einerseits liegt eine gewisse Redundanz vor und Messfehler können erkannt werden.

Im Hinblick auf die Bestimmung der Deformationsrichtung sind die Einzelsensoren in verschiedenen Ebenen zueinander angeordnet.

Um einen besonders einfach handhabbaren Sensor zu erreichen, bilden die Einzelsensoren einen Käfig. Der Käfig verfügt nur über eine geringe Gestaltfestigkeit und reduziert damit nicht die Güte des Messsignals.

Dazu ist weiter vorgesehen, dass der Käfig in Längsrichtung des Fahrwerksbauteils einseitig gehalten wird. Axiale Verspannungen könnten ebenfalls das Messsignal verfälschen.

Zur Fixierung des Sensors weist der Käfig einen ringförmigen Befestigungsabschnitt auf. Die Sensoren selbst werden im Hinblick auf die Befestigungsfunktion nicht belastet.

Gemäß einem vorteilhaften Unteranspruch wird der Befestigungsabschnitt von einem Befestigungsmittel des Fahrwerkbauteils fixiert. Der Käfig kann z. B. aus einem Kunststoff bestehen, der von einer Überwurfmutter verspannt wird.

Dazu ist der Befestigungsabschnitt radial elastisch ausgeführt, beispielsweise indem dieser schlitzförmige Ausnehmungen aufweist.

In weiterer Ausgestaltung ist das Fahrwerksbauteil zweigeteilt und bildet eine Trennfuge, an der der Befestigungsabschnitt angeordnet ist. Folglich wird kein zusätzliches Befestigungsmittel für den Sensor benötigt.

Man kann zusätzlich vorsehen, dass der Befestigungsabschnitt und das Befestigungsmittel fest miteinander verbunden sind. Dadurch wird die Handhabung während des Montagevorgangs deutlich vereinfacht.

Um möglichst schon geringste Deformationen erfassen zu können, ist der Sensor zumindest in der Nähe des Bereichs des Fahrwerksbauteils mit der geringsten Gestaltfestigkeit angeordnet.

Anhand der folgenden Figurenbeschreibung soll die Erfindung näher erläutert werden.
- Fig. 1: Beispielhafte Prinzipdarstellung eines Fahrwerks
- Fig. 2: Spurstange mit Lagern als Baugruppe
- Fig. 3: Spurstange nach Fig. 2 nur mit Axiallager
- Fig. 4 u. 5: Detaildarstellung der Spurstange mit Sensor

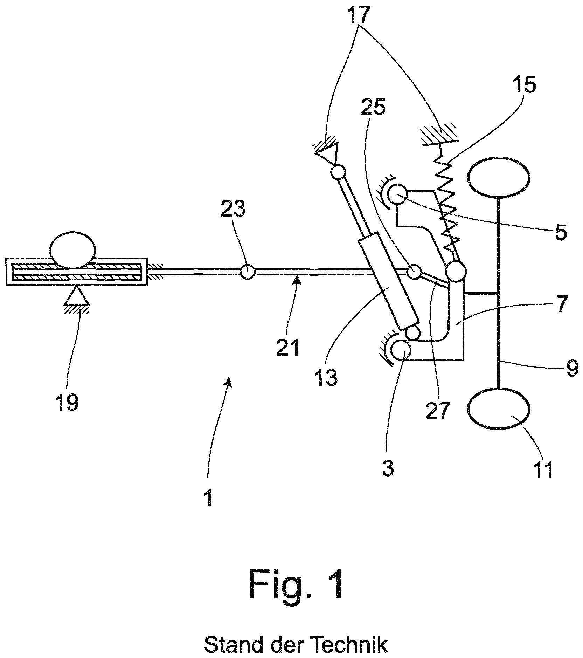

Ein in Figur 1 beispielhaft dargestelltes Fahrwerk 1 für eine Fahrzeugseite umfasst einen aufbauseitig über Gelenke 3; 5 befestigten Querlenker 7 an dem ein Radträger 9 für ein Rad 11 angeordnet ist. Über einen Schwingungsdämpfer 13 und eine nur prinzipiell dargestellte Fahrzeugtragfeder 15 stützt sich ein Fahrzeugaufbau 17 auf dem Fahrwerk 1 ab.

Das Fahrwerk 1 ist lenkbar ausgeführt und umfasst eine nur schematisch dargestellte Lenkeinrichtung 19 mit einem sich daran anschließenden Fahrwerksbauteil 21. Das Fahrwerksbauteil 21 ist bei diesem Ausführungsbeispiel als eine Spurstange 21 ausgebildet, die endseitig jeweils ein Lager 23; 25 aufweist. Zwischen der Spurstange 21 und dem Radträger 9 ist ein Lenkungshebel 27 angeordnet, über den eine Axialbewegung der Spurstange 21 in eine Schwenkbewegung des Radträgers 9 bzw. des Rades 11 umgesetzt wird. Grundsätzlich wäre die Erfindung auch bei einem nicht lenkbaren Fahrwerk einsetzbar.

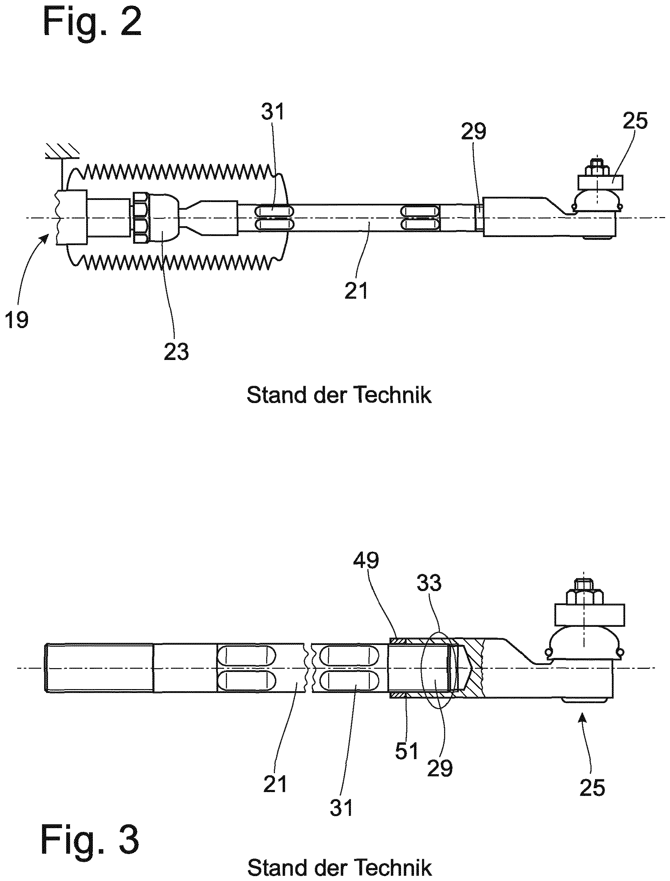

Die Figur 2 zeigt die Spurstange 21 nach Fig. 1 in entsprechender Einbaulage. Die Spurstange 21 ist zweigeteilt und umfasst einen Gewindeschaft 29 zur Längenjustierung, s. Fig. 3, um einen definierten Winkel zwischen der Spurstange 21 und dem dazu abgewinkelten Lenkungshebel 27 einzustellen. Die Spurstange 21 verfügt über mindestens eine Schlüsselfläche 31 zur Verdrehung der Spurstange, wenn eine Gewindeverbindung 33 mit der Lenkeinrichtung 19 geschlossen wird.

Bei einer Überlastung des Fahrwerks 1 stellt die Spurstange 21 tendenziell ein empfindlicheres Bauteil dar, weil eine Deformation direkt das Lenkverhalten aber auch den Geradeauslauf des Fahrzeugs beeinflusst.

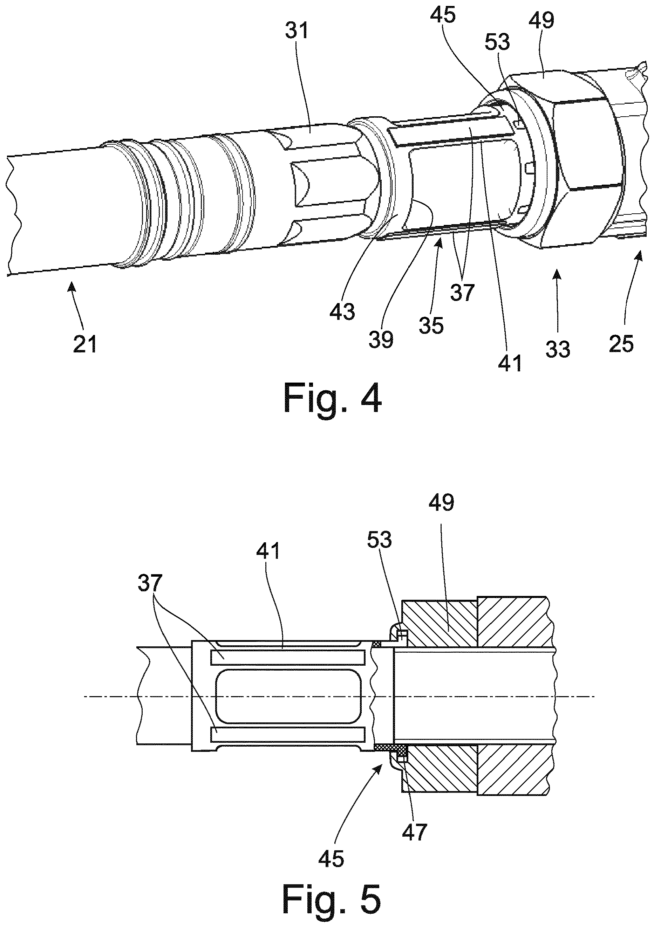

Die Figuren 4 und 5 beschränken sich auf einen Teilbereich der Spurstange im Bereich der Gewindeverbindung 33 zum Lager 23. Die Spurstange 21 verfügt zur Überlasterkennung über einen Sensor 35, der eine Sollzustandsgröße des Fahrwerksbauteils bzw. der Spurstange 21 erfasst. Konkret ist der Sensor als ein Deformationserfassungssensor für die Spurstange 21 ausgeführt.

Der Sensor umfasst mehrere Einzelsensoren 37, die sich in Längsrichtung der Spurstange 21 erstrecken. In Umfangsrichtung verteilt sind die Einzelsensoren damit in verschiedenen Ebenen zueinander angeordnet. Die Einzelsensoren 37 können verschiedenen Messverfahren folgen. Grundsätzlich führt eine Längenänderung eines Einzelsensors zu einem veränderten elektrischen Signal, das einer nicht dargestellten Auswerteeinrichtung zugeführt wird. Wird die Spurstange 21 verbogen, dann tritt genauso eine Verformung auf, wie bei einer Torsion, wobei eine Torsion der Spurstange 21 aufgrund der endseitigen Lager 23; 25 sehr unwahrscheinlich ist.

Wie man ebenfalls aus der Fig. 4 entnehmen kann, bilden die Einzelsensoren 37 einen Käfig 39 bzw. stützen sich die Einzelsensoren 37 auf einem Käfig ab. Der Käfig 39 mit seinen Längsstegen 41 und endseitigem Lagerring 43 besteht bevorzugt aus einem Kunststoff, so dass die Befestigung der Einzelsensoren 37 bereits im Rahmen des Spritzvorgangs hergestellt werden kann. Der Innendurchmesser des Käfigs 39 ist so dimensioniert, dass eine Verdrehung zur Spurstange möglich wäre.

Der Käfig wird in Längsrichtung des Fahrwerksbauteils einseitig gehalten, d. h. das Ende in Richtung des Lagers 23 ist fixiert und das andere Ende in Richtung des Lenkungshebels 27 ist frei. Diese Festlegung des Haltepunkts ist für diese Variante bestimmt, kann aber bei einer anderen Ausgestaltung der Achse auch abweichend realisiert sein. Mit der einseitigen Fixierung sollen Axialspannungen innerhalb des Sensors 35 vermieden werden.

Der Käfig 39 weist einen ringförmigen Befestigungsabschnitt 45 auf, der einen Flanschbereich 47 oder einen Konusbereich umfasst. Der Befestigungsabschnitt 45 wiederum wird von einem Befestigungsmittel 49 gehalten, in diesem Fall eine Gewindemutter des Fahrwerkbauteils, die in den Gewindeschaft 29 eingreift und damit den Käfig 39 fixiert. Der Befestigungsabschnitt 45 ist folglich an einer Trennfuge 51 des zweigeteilten Fahrwerkbauteils, nämlich zwischen den Spurstangen 21 bzw. dem Gewindeschaft 29 und dem Lager 23 angeordnet. (Fig. 3)

Der Befestigungsabschnitt 45 ist bevorzugt radial elastisch ausgeführt, beispielsweise indem der Befestigungsabschnitt 45 eine Anzahl von Ausnehmungen 53 oder Schlitze aufweist, die in Umfangsrichtung verteilt angeordnet sind.

Man kann auch vorsehen, dass der Befestigungsabschnitt 45 und das Befestigungsmittel 49 fest miteinander verbunden sind, indem der Befestigungsabschnitt 45 an dem Befestigungsmittel 49 angespritzt ist. (Fig. 5)

Bevorzugt ist der Sensor 35 zumindest in der Nähe des Bereichs des Fahrwerksbauteils bzw. der Spurstange 21 mit der geringsten Gestaltfestigkeit angeordnet. Damit wird erreicht, dass schon kleine Deformationen, die an anderen Bauteilen oder Bauteilabschnitten der Spurstange noch nicht messbar wären, nun auch erfassbar sind.

### Bezugszeichen

- 1: Fahrwerk
- 3: Gelenk
- 5: Gelenk
- 7: Querlenker
- 9: Radträger
- 11: Rad
- 13: Schwingungsdämpfer
- 15: Tragfeder
- 17: Fahrzeugaufbau
- 19: Lenkeinrichtung
- 21: Fahrwerksbauteil (Spurstange)
- 23: Lager
- 25: Lager
- 27: Lenkungshebel
- 29: Gewindeschaft
- 31: Schlüsselfläche
- 33: Gewindeverbindung
- 35: Sensor
- 37: Einzelsensor
- 39: Käfig
- 41: Längssteg
- 43: Lagerring
- 45: Befestigungsabschnitt
- 47: Flanschbereich
- 49: Befestigungsmittel
- 51: Trennfuge
- 53: Ausnehmungen

## Patentansprüche

1. Überlasterkennung an einem stangenartigen Fahrwerksbauteil, umfassend einen Sensor (35), der eine Sollzustandsgröße des Fahrwerksbauteils (21) erfasst, wobei der Sensor (35) als ein Deformationserfassungssensor für ein einzelnes Fahrwerksbauteil (21) ausgeführt ist und der Sensor (35) mehrere Einzelsensoren (37) umfasst, wobei die Einzelsensoren (37) einen Käfig (39) bilden, **dadurch gekennzeichnet, dass** der Käfig (39) einen ringförmigen Befestigungsabschnitt (45) aufweist, mit dem der Käfig (39) in Längsrichtung des Fahrwerksbauteils (21) am Fahrwerksbauteil (21) einseitig gehalten ist.

2. Überlasterkennung nach Anspruch 1, **dadurch gekennzeichnet, dass** die Einzelsensoren (37) in verschiedenen Ebenen zueinander angeordnet sind.

3. Überlasterkennung nach Anspruch 1, **dadurch gekennzeichnet, dass** der Befestigungsabschnitt (45) von einem Befestigungsmittel (49) des Fahrwerkbauteils (21) am Fahrwerksbauteil (21) fixiert ist.

4. Überlasterkennung nach Anspruch 1, **dadurch gekennzeichnet, dass** der Befestigungsabschnitt (45) radial elastisch ausgeführt ist.

5. Überlasterkennung nach Anspruch 1, **dadurch gekennzeichnet, dass** das Fahrwerksbauteil (21) zweigeteilt ist und eine Trennfuge (51) bildet, an der der Befestigungsabschnitt (45) angeordnet ist.

6. Überlasterkennung nach Anspruch 3, **dadurch gekennzeichnet, dass** der Befestigungsabschnitt (45) und das Befestigungsmittel (49) fest miteinander verbunden sind.

7. Überlasterkennung nach Anspruch 1, **dadurch gekennzeichnet, dass** der Sensor (35) zumindest in der Nähe des Bereichs des Fahrwerksbauteils (21) mit der geringsten Gestaltfestigkeit angeordnet ist.

## Claims

1. Overload identification for a bar-type chassis component, comprising a sensor (35) which detects a target state variable of the chassis component (21), wherein the sensor (35) is designed as a deformation-detecting sensor for an individual chassis component (21) and the sensor (35) comprises a plurality of individual sensors (37), wherein the individual sensors (37) form a cage (39), **characterized in that** the cage (39) has an annular fastening section (45) by way of which the cage (39) is held at one end on the chassis component (21) in the longitudinal direction of the chassis component (21).

2. Overload identification according to Claim 1, **characterized in that** the individual sensors (37) are arranged in a different planes to one another.

3. Overload identification according to Claim 1, **characterized in that** the fastening section (45) is fixed on the chassis component (21) by a fastening means (49) of the chassis component (21).

4. Overload identification according to Claim 1, **characterized in that** the fastening section (45) is of radially elastic design.

5. Overload identification according to Claim 1, **characterized in that** the chassis component (21) is divided into two and forms a joint (51) at which the fastening section (45) is arranged.

6. Overload identification according to Claim 3, **characterized in that** the fastening section (45) and the fastening means (49) are fixedly connected to one another.

7. Overload identification according to Claim 1, **characterized in that** the sensor (35) is arranged at least in the vicinity of the region of the chassis component (21) with the lowest structural strength.

## Revendications

1. Reconnaissance de surcharge sur un composant de train de roulement en forme de barre, comprenant un capteur (35) qui détecte une grandeur d'état de consigne du composant de train de roulement (21), dans laquelle le capteur (35) est réalisé comme un capteur de détection de déformation pour un composant de train de roulement (21) individuel et le capteur (35) comprend plusieurs capteurs individuels (37), dans laquelle les capteurs individuels (37) forment une cage (39),
**caractérisée en ce que** la cage (39) présente une partie de fixation annulaire (45) par laquelle la cage (39) est maintenue sur le composant de train de roulement (21) d'un côté dans la direction longitudinale du composant de train de roulement (21).

2. Reconnaissance de surcharge selon la revendication 1, **caractérisée en ce que** les capteurs individuels (37) sont disposés sur différents niveaux les uns par rapport aux autres.

3. Reconnaissance de surcharge selon la revendication 1, **caractérisée en ce que** la partie de fixation (45) est fixée au composant de train de roulement (21) par un moyen de fixation (49) du composant de train de roulement (21).

4. Reconnaissance de surcharge selon la revendication 1, **caractérisée en ce que** la partie de fixation (45) est réalisée de manière radialement élastique.

5. Reconnaissance de surcharge selon la revendication 1, **caractérisée en ce que** le composant de train de roulement (21) est divisé en deux, et forme une ligne de joint (51) à laquelle est disposée la partie de fixation (45).

6. Reconnaissance de surcharge selon la revendication 3, **caractérisée en ce que** la partie de fixation (45) et le moyen de fixation (49) sont reliés solidement l'une à l'autre.

7. Reconnaissance de surcharge selon la revendication 1, **caractérisée en ce que** le capteur (35) est disposé au moins à proximité de la zone du composant de train de roulement (21) ayant la plus faible stabilité de forme.
